# EUROPEAN PATENT APPLICATION

(11) **EP 2 485 158 A1**
(43) Date of publication of application: **08.08.2012**
(21) Application number: 10820481.9
(22) Date of filing: 27.09.2010
(51) Int. Cl.: G06F 17/21

(54) **DATA PROCESSING APPARATUS, DATA PROCESSING METHOD, PROGRAM AND COMPUTER-READABLE MEDIUM**

(30) Priority: 29.09.2009 JP 2009224797
(71) Applicant: NTT DOCOMO, INC., Chiyoda-ku Tokyo 100-6150 (JP)
(72) Inventor: HASHIDA, Naoki, Tokyo 100-6150 (JP); HAMADA, Hisashi, Tokyo 100-6150 (JP); FUJII, Mizuri, Tokyo 100-6150 (JP); MAEDA, Yoshiaki, Tokyo 100-6150 (JP)
(74) Representative: HOFFMANN EITLE
(86) International application number: PCT/JP2010/066686
(87) International publication number: WO 2011/040366

(57) **Abstract**

[Object] To enable an attribute of a data group including multiple items of data to be determined easily after items of the data are inputted.

[Means to Achieve the Object] A data-processing device includes: a display control means (115) that causes a display means to display multiple input fields (T21 to T27) that receive input of data; an acquisition means (111) that acquires multiple items of data constituting a data group; a recording means (112) that records into a storage means a first item of data, which is one of the multiple items of data acquired by the acquisition means, while associating the first item of data with a first input field predetermined from among the multiple input fields, and records into the storage means a second item of data, which is one of the multiple items of data acquired by the acquisition means and inputted later than the first item of data, while associating the second item of data with a second input field(s) that is included in the multiple input fields and is different from the first input field; and a specifying means (114) that specifies an attribute of the data group in accordance with the second input field, the second input field being associated with the second item of data recorded into the storage means by the recording means.

## Description

### Technical Field

The present invention relates to data-recording technology.

### Background Art

A data-recording function is implemented by a so-called memo function, schedule function, or the like. In general, each of these functions is implemented by independent application software (hereinafter simply referred to as "application"). JP-A-2002-149617 discloses a technology in which an "operation mode," which may correspond to the aforementioned functions, are changed in accordance with an operation performed by a user instructing a mode change.

### Disclosure of Invention

### Problems to be Solved by the Invention

Though a memo function and a schedule function have a common function of recording data, they are characterized also by having other, different functions, and are used selectively by a user according to such characteristics. However, it is often the case that a user inputs data without a specific purpose or use in mind, or a user may wish to use inputted data for a function other than the function for which the data has been inputted to be used.
Accordingly, an objective of the present invention is to enable an attribute of a data group constituted by multiple items of data to be determined easily after items of the data are inputted.

### Means of Solving the Problems

A data-processing device according to an aspect of the present invention includes: a display control means that causes a display means to display multiple input fields that receive input of data; an acquisition means that acquires multiple items of data constituting a data group; a recording means that records into a storage means a first item of data, which is one of the multiple items of data acquired by the acquisition means, while associating the first item of data with a first input field predetermined from among the multiple input fields, and records into the storage means a second item of data, which is one of the multiple items of data acquired by the acquisition means and inputted later than the first item of data, while associating the second item of data with a second input field(s) that is included in the multiple input fields and is different from the first input field; and a specifying means that specifies an attribute of the data group in accordance with the second input field, the second input field being associated with the second item of data recorded into the storage means by the recording means.

In the aforementioned data-processing device, the acquisition means may include: a first acquisition means that acquires the first item of data; and a second acquisition means that, after the acquisition of the first item of data by the first acquisition means, acquires and associates with the input field(s) at least a part of a remainder of the multiple items of data.
In the aforementioned data-processing device, the specifying means may specify the attribute of the data group as a predetermined attribute in a case where the second item of data is not recorded by the recording means.
In the aforementioned data-processing device, the input fields that may be associated with the second item of data by the recording means may include an input field that is associated with an attribute and an input field that is not associated with an attribute, and the specifying means may specify the attribute of the data group as a predetermined attribute in a case where the second input field(s) associated with the second item of data by the recording means does not include the input field that is associated with an attribute.
In the aforementioned data-processing device, the display control means may cause the display means to display the data group recorded by the first and second recording means in a display mode corresponding to the attribute specified by the specifying means.

A program according to another aspect of the present invention causes a computer to function as the aforementioned data-processing device. Further, a program of the present invention may be provided such that the program can be downloaded to a computer and installed therein for use. It is to be noted that the present invention may be embodied as a non-transitory storage medium, such as an optical disk, in which such a program is stored.
Further, the present invention may be embodied as a data-processing method, a method of receiving input of data, a method of recording data, a method of determining an attribute of data, and so on.

### Effects of the Invention

In the present invention, an attribute of a data group constituted by multiple items of data can be determined easily after input of the items of data.

### Brief Description of the Drawings

FIG. 1 is a block diagram showing a hardware configuration of an information-processing device.
FIG. 2 is a functional block diagram showing functions implemented by a control unit when data are recorded.
FIG. 3 is a diagram showing an example of a quick input screen.
FIG. 4 is a flowchart showing processes executed by a control unit when data are recorded.
FIG. 5 is a diagram showing an example of a detail input screen.
FIG. 6 is a diagram showing an example of data groups recorded in a storage unit.
FIG. 7 is a diagram showing an example of a list view screen.

### Description of Reference Symbols

10: information-processing device; 110: control unit; 111: acquisition unit; 111a: first acquisition unit; 111b: second acquisition unit; 112: recording unit; 113: reading unit; 114: specifying unit; 115: display control unit; 120: storage unit; 130: communication unit; 140: operation unit; 150: display unit; 160: picture-taking unit; 170: sound input/output unit

### Best Mode for Carrying out the Invention

### [Exemplary Embodiment]

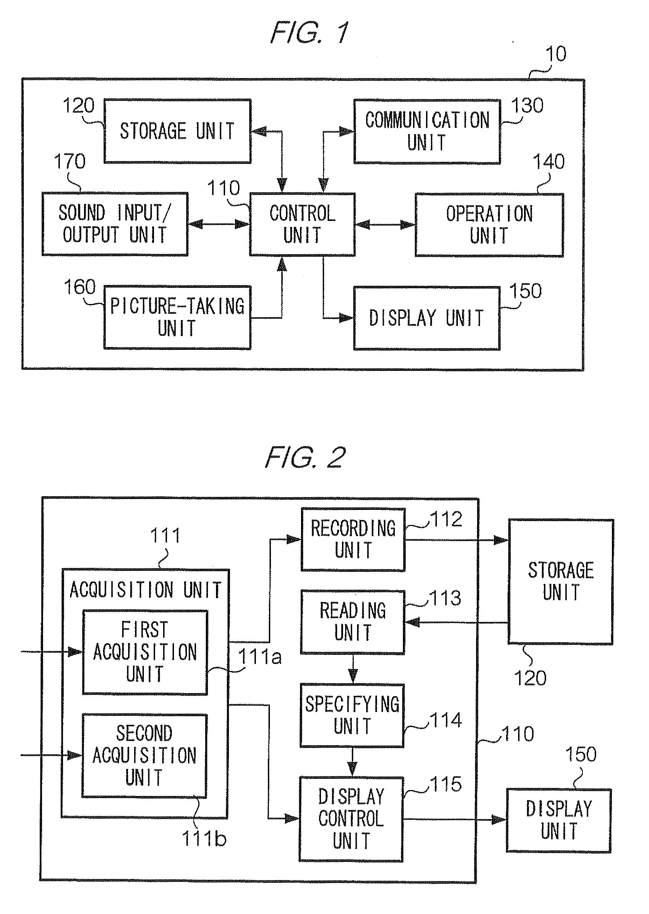

FIG. 1 is a block diagram showing a hardware configuration of an information-processing device, which is an exemplary embodiment of the present invention. Information-processing device 10 of this exemplary embodiment is a mobile phone, to which a telephone number and an email address are allocated in advance. As shown in FIG. 1, information-processing device 10 includes control unit 110, storage unit 120, communication unit 130, operation unit 140, display unit 150, picture-taking unit 160, and sound input/output unit 170. It is to be noted here that control unit 110 corresponds to an example of a data-processing device of the present invention.

Control unit 110 includes a processing unit such as a CPU (Central Processing Unit) and a memory, and executes programs to control operations of various parts of information-processing device 10. Storage unit 120 includes a storage medium such as an EEPROM (Electrically Erasable and Programmable Read Only Memory), a flash memory, or the like, and stores data necessary for control unit 110 to execute the processes. It is to be noted that storage unit 120 may include a member that is detachable from mobile terminal 10, such as a memory card. Storage unit 120 is an example of a storage means of the present invention.

Communication unit 130 includes an interface capable of communicating with a communication network, and sends and receives data to and from the communication network. Communication unit 130 may conduct communication with one communication network via another communication network. The communication network herein may include the Internet and the Public Switched Telephone Network, in addition to a mobile communication network and a wireless LAN (Local Area Network).

Operation unit 140 includes operation elements such as buttons, and receives an operation performed by a user. The operation elements include those that enable input of characters (e.g., hiragana characters or alphabet letters) and numbers. Operation unit 140 provides control unit 110 with operation information representing the operation(s) received. The operation information may include items of information representing letters or numbers, as well as a result of selection of an input field, which will be described later. It is to be noted that all or a part of the operation elements of operation unit 140 may be embodied by a touch screen (touch panel) disposed over display unit 150. Display unit 150 includes display elements utilizing liquid crystal, organic electroluminescence, or the like, and a drive circuit, and displays an image in a display area constituted by the display elements, in accordance with display data provided from control unit 110. Display unit 150 corresponds to an example of a display means of the present invention.

Picture-taking unit 160 includes an imaging device such as a CCD (Charge Coupled Device), and generates image data representing an object whose picture has been taken. Picture-taking unit 160 provides the generated image data to control unit 110 or storage unit 120. The image data may represent a still image or a moving image. When a picture is taken using picture-taking unit 160, display unit 150 may function as a viewfinder.

Sound input/output unit 170 includes a microphone and a speaker, and performs input and output of sound. It is to be noted that input of sound indicates conversion of sound to sound data that can be processed by information-processing device 10, and output of sound indicates conversion of sound data to sound. When performing input of sound, sound input/output unit 170 provides the sound data to control unit 110 or storage unit 120. Sound input/output unit 170 may be input and output terminals for connection with a microphone and a speaker. In such a case, sound input/output unit 170 performs input and output of sound data, instead of sound.

The foregoing is a description of the hardware configuration of information-processing device 10. Information-processing device 10 having such a configuration implements multiple functions by executing a program(s). The functions described herein include functions that record data (hereinafter referred to as "data-recording functions"). In this exemplary embodiment, the data-recording functions include "quick input function," "schedule function," "TODO list functlon," "message function," and "memo function." These data-recording functions may be implemented by cooperation of multiple programs corresponding to respective functions, or all of these functions may be implemented by a single program.

The quick input function is a function that first receives input of data that relates to another data-recording function. In other words, an item of data inputted through the quick input function is the first item of data among a set of items of data relating to the schedule function, TODO list function, message function, or memo function. Items of data inputted through the quick input function may include taken-image data and sound data.

The schedule function is a function that records plans of a user based on a predetermined time unit (e.g., a day, an hour, etc.). Items of data recorded by the schedule function include at least an item of data representing a plan, and an item of data representing a date and time, where the item of data representing a plan is data inputted through the quick input function.

The TODO list function is a function that records what a user intends to do (actions). Items of data recorded by the TODO list function include at least an item of data representing an action to be performed by a user (may be referred to as a "TODO" hereinafter) and a status of a TODO (such as "not yet started," "doing now," "completed," etc.), where the item of data representing an action to be performed by a user is data inputted through the quick input function.

The message function is a function that records a message transmitted from the user of information-processing device 10 to another user. A message here indicates a group of items of data that are sent and received in accordance with an item of data representing a destination (such as an email address, telephone number, etc.), and a group of items of data sent and received by an electronic mail or short message service may be regarded as a message. Items of data recorded by the message function include at least an item of data representing a body of a message, and an item of data representing a destination of the message, where the item of data representing a body of a message is data inputted through the quick input function. The message function may include only a function for allowing a user to create a draft of a message, or may additionally include a function for transmitting the message.

The memo function is a function that records items of data not associated with any of the schedule function, TODO list function, or message function. Items of data recorded by the memo function include at least an item(s) of data that has been inputted through the quick input function. Unlike the items of data recorded by the schedule function, TODO list function, or message function, the items of data recorded by the memo function may include only an item(s) of data inputted through the quick input function. In other words, a data set that includes only items of data inputted through the quick input function, and that does not include otherwise inputted items of data, is always associated with the memo function.

In this exemplary embodiment, each item of data is associated with an input field, where the input field is a predetermined region that is displayed on display unit 150 to receive input of data by a user, and to display an image representing the inputted data. An input field is represented by a GUI (Graphical User Interface) widget (which may be also referred to as a GUI control), such as a text box, check box, radio button, dropdown list, and so on.

FIG. 2 is a functional block diagram that shows functions implemented by control unit 110 when data are recorded. Control unit 110 executes a program(s) to implement functions of acquisition unit 111, recording unit 112, reading unit 113, specifying unit 114, and display control unit 115, which are shown in FIG. 2. These functions may be included in the aforementioned data-recording functions or may be functions separate from or independent of the data-recording functions.

Acquisition unit 111 acquires multiple items of data and stores the acquired items of data in a memory temporarily. More specifically, acquisition unit 111 includes first acquisition unit 111 a and second acquisition unit 111 b. First acquisition unit 111a acquires items of data inputted by the aforementioned quick input function, while second acquisition unit 111b acquires items of data inputted by functions other than the quick input function. As will be described later, each item of data acquired by first acquisition unit 111a and second acquisition unit 111b is associated with a predetermined input field. Further, of a set of items of data inputted by a data-recording function, the item of data inputted first is acquired by first acquisition unit 111a. Namely, the item of data inputted first (first item of data) may be acquired through a channel that is different from a channel through which another item of data (second item of data) is acquired.
It is to be noted that a set of items of data inputted by a data-recording function will be referred to as a "data group" in the following description. Data groups are groups of data that are distinguished from each other and characterized by attributes, which will be described later.

Recording unit 112 causes the items of data that have been acquired and stored in the memory by acquisition unit 111 to be stored in storage unit 120 at predetermined timings. Recording unit 112 records the items of data for each data group, while associating the items of data constituting each data group with input fields. Reading unit 113 reads out the data groups that have been recorded in storage unit 120 by recording unit 112. Reading unit 113 reads out a data group(s) from storage unit 120 when the data group(s) is displayed.

Specifying unit 114 specifies an attribute allocated to each data group recorded by recording unit 112 and read out by reading unit 113. In this exemplary embodiment, an attribute of a data group indicates which of the schedule function, TODO list function, message function, and memo function the data group relates to. It should be noted that multiple attributes may be allocated to a single data group. Further, though there are four attributes of data in this description, there may be another attribute, or a user may define (add, delete, etc.) an attribute.
Display control unit 115 controls a display shown by display unit 150. Display control unit 115 causes display unit 150 to display multiple input fields when input of data is to be performed, and causes display unit 150 to display data groups read out from storage unit 120 when the data groups are to be displayed in a list view.

According to the configuration described in the foregoing, information-processing device 10 of this exemplary embodiment receives data inputted by a user. When initiating input of data, the user may use the quick input function. The quick input function is started upon a predetermined operation performed by the user. Preferably, this operation should be simple; namely, the operation should include a small number of pressing operations of the operation elements, for example.

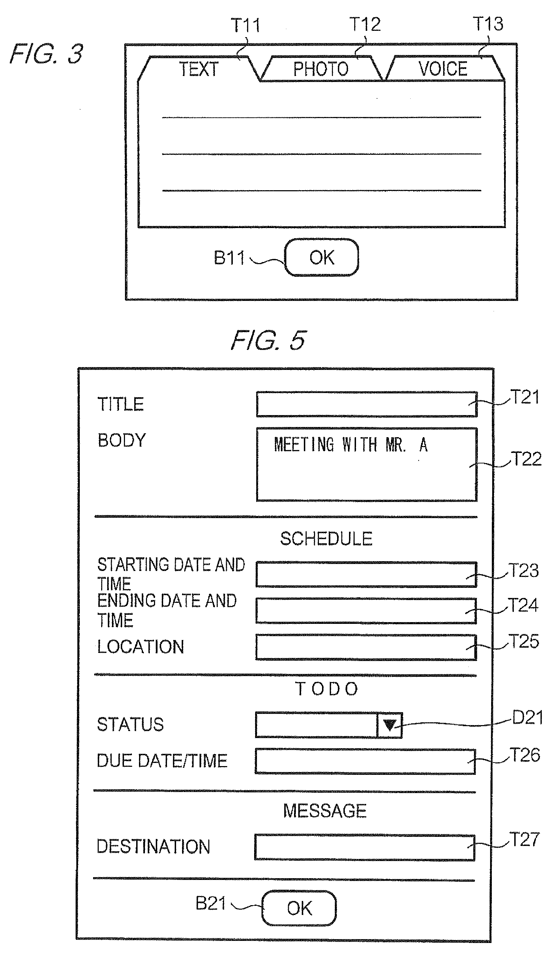

FIG. 3 shows an example of a screen (hereinafter, "quick input screen") that is displayed on display unit 150 when the quick input function is started. In FIG. 3, tabs T11, T12, and T13 correspond to characters, images, and sound, respectively, and only one of them can be selected at a time. For example, when tab T11 is selected, the user can input data of characters by using operation unit 140, and when tab T 12 is selected, the user can input data of an image by using picture-taking unit 160. Further, button B11 is a button that is pressed when the user confirms the inputted data and accepts recording of the data.

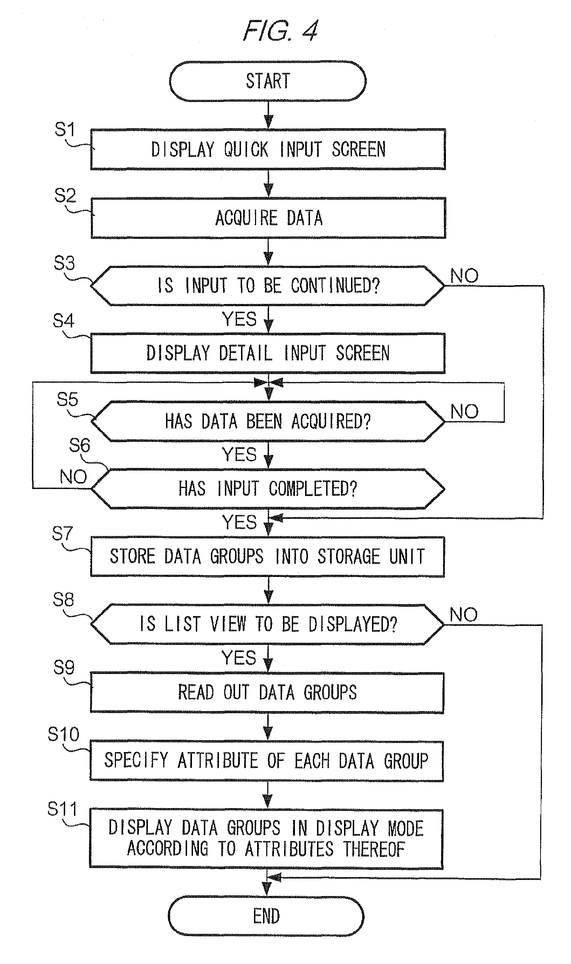

FIG. 4 is a flowchart showing the process executed by control unit 110 when data are recorded. As shown in FIG. 4, control unit 110 causes display unit 150 to display the quick input screen when recording of data is initiated (step S1). By causing the quick input screen to be displayed to receive input operations by the user, control unit 110 acquires an item of data and stores the item of data in the memory temporarily (step S2). The item of data acquired here is one of character data, taken-image data, and sound data.

At this point, control unit 110 determines whether the input of data is to be continued (step S3). This determination is made based on an operation performed by the user. The user may terminate the input of data at this point or may continue to input data. In a case where the input of data is terminated at this point, the inputted item of data is associated with the aforementioned memo function.
If it is determined in step S3 that the input of data is to be continued, control unit 110 causes display unit 150 to display a screen for receiving additional items of data (step S4). This screen will be referred to as a "detail input screen" in the following description.

FIG. 5 is a diagram showing an example of the detail input screen. In FIG. 5, text box T22 is an input field that is associated with an item of data corresponding to the body in a data group. The item of data acquired in step S2 is associated with this text box T22 and is displayed therein. It is to be noted that, instead of the item of data acquired in step S2 as it is, a part of the item of data acquired in step S2 or an image (icon, thumbnail, etc.) representative of the item of data may be displayed in text box T22. Text box T21 is an input field that is associated with an item of data corresponding to the title in a data group. The title is inputted when it is difficult to grasp the content of the data group from only the body. Therefore, the title is not an indispensable input item, and may be omitted as necessary. Further, the title may be extracted from a part of the body, where the part of the body may be, for example, a predetermined number of characters at the beginning of the body, the first line of the body, a predetermined string of characters included in the body, or the like.

Text boxes T21 and T22 are input fields that are not associated with a specific attribute(s), but are common to each attribute. Thus, these input fields will be referred to as "common fields" in the following description. On the other hand, the input fields described below are associated with specific attributes, and will be referred to as "dedicated fields" in the following description.

Text boxes T23, T24, and T25 are input fields associated with the schedule function, and are dedicated fields. Text box T23 is associated with an item of data corresponding to a starting date and time in a data group representing a plan of the user. Text box 24 is associated with an item of data corresponding to an ending date and time. Further, text box T25 is associated with an item of data corresponding to a location relating to the plan in the data group representing the plan of the user. However, text box 25 is not an input field to which input is indispensable. Furthermore, the user may omit inputting an item of data corresponding either to the starting date and time or to the ending date and time. In such a case, if at least one of the starting date and time and the ending date and time has been inputted, information-processing device 10 determines that the data group that has been inputted at that point is associated with the schedule function.

Dropdown list D21 and text box T26 are input fields associated with TODO list function, and are dedicated fields. Dropdown list D21 is associated with an item of data corresponding to the status of a content inputted in the aforementioned body (namely, a TODO). Accordingly, dropdown list D21 is provided with selectable choices such as "not yet started," "doing now," and "completed." Text box T26 is associated with an item of data corresponding to a deadline for an action to be performed by the user, but is not an input field to which input is mandatory.

Text box T27 is an input field corresponding to the message function, and is a dedicated field. Text box T27 is associated with an item of data corresponding to a destination in a data group representing a message. It is to be noted that a message is not limited to having a single destination, and may have multiple destinations. If a message has multiple destinations, one or more of them may correspond to a carbon copy destination(s) and/or a blind carbon copy destination(s). Further, the message function may be adapted so as to allow an item of data other than the body to be attached, as required. In such a case, an input field for enabling designation of an item of data that is to be attached is provided separately.
Button B21 is a button that is pressed down when the user confirms the inputted data group and accepts recording of the data group.

It is to be noted that the detail input screen does not have to be displayed in its entirety at one time, and it is acceptable that the entire screen can be viewed by scrolling the screen, for example. Further, it is possible to provide the detail input screen with a button or the like for controlling display and hiding (or spreading and folding) of an input field, so that an unnecessary input field is not displayed. It is also to be noted that an input field other than those shown in the example of FIG. 5 may be used.

The user refers to the above-described detail input screen, and selects desired input fields into which to input data. By such an operation, the user may start the selection of input fields from any input field, and there may be an input field that is not selected by the user (i.e., an input field in which no data are inputted). Further, the user may select the input field corresponding to the body (namely, text box T22 in the example shown in the drawing) to correct the data of the body, if necessary.

Control unit 110 waits for input of data by the user, and upon receipt of input data, control unit 110 acquires items of data corresponding to respective input fields, and stores the acquired items of data in the memory temporarily such that the items of data are associated with the respective input fields (step S5). Further, control unit 110 determines whether input of a data group has been completed by determining whether button B21 is pushed down (step S6). If completion of data input has not been instructed yet, control unit 110 returns to a state of waiting for input of data by the user (step S5).
On the other hand, if the user has instructed completion of data input, control unit 110 records the data group into storage unit 120 (step S7). At this time, control unit 110 associates each item of data constituting the data group with a corresponding input field.

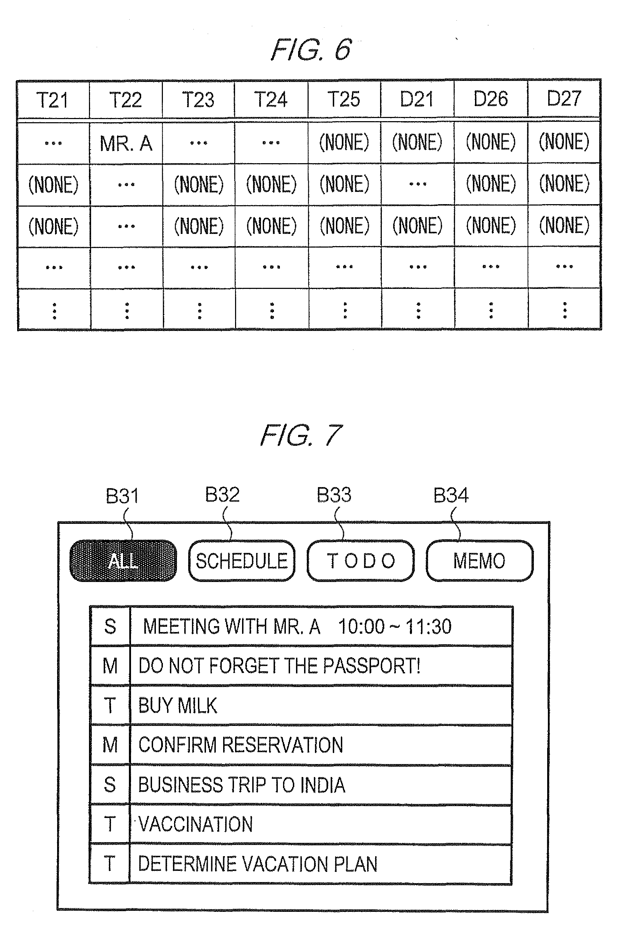

FIG. 6 is a diagram showing an example of data groups recorded in storage unit 120. In FIG. 6, a set of items of data in each line constitutes a data group. In this exemplary embodiment, data groups are stored in storage unit 120 without being distinguished by attributes. In this case, an attribute of one data group is determined based on whether the data group includes a significant item of data (indicated by a symbol "..." in FIG. 6); namely, an item of data that is associated with an input field that specifies an attribute. For example, in a case where a data group includes an item of data representing a destination, an attribute of the data group is determined to be an attribute corresponding to the message function. There may be a data group having multiple attributes, such as a data group corresponding to the TODO list function as well as to the schedule function.
It is to be noted that a mode of storage of data is not limited to the example shown in FIG. 6. For example, it is possible to adopt a mode of storage of data in which data groups are stored such that the data groups are distinguished from each other based on their attributes.

After the data groups are stored, control unit 110 determines whether the data groups are to be displayed in a list view (step S8). This determination is made based on an operation performed by the user. Namely, the determination is made based on whether the display of the list view is instructed by the user. If the display of the list view is instructed by the user, control unit 110 reads out the data groups stored in storage unit 120 (step S9), specifies the attribute of each data group (step S10), and causes display unit 150 to display each data group in a display mode corresponding to the specified attribute (step S11).

FIG. 7 is a diagram showing an example of a screen displaying the data groups in a list view (hereinafter referred to as a "list view screen"). The example shown in FIG. 7 illustrates a screen displaying the data groups of all attributes. In this example, a part of the data (such as the body and the title) of each data group is displayed. That is, it is not necessary that all of the data constituting each data group be displayed. In this example, the attributes of the data groups are distinguished by images (icons) added on the left side. Specifically, an image depicting a letter "S" is added to the data groups associated with the schedule function, an image depicting a letter "T" to the data groups associated with the TODO list function, and an image depicting a letter "M" to the data groups associated with the memo function. These images may distinguish the attributes by using pictograms, colors, and so on.

In the list view screen, the user can select any data group. Upon selection of a data group, information-processing device 10 causes the detail input screen (see FIG. 5) to be displayed so that the data can be edited (or altered).
In FIG. 7, buttons B31, B32, B33, and B34 are buttons for changing the mode of display of the list view. Button B31 is a button that is selected when the data groups of all attributes are to be displayed, and in the example of FIG. 7, button B31 is selected. Button B32 is a button that is selected when only the data groups associated with the schedule function are to be displayed. For example, when button B32 is selected, only the data groups associated with the schedule function are displayed and the other data groups are excluded from the items to be displayed. It is to be noted that the buttons displayed on the screen are not limited to those illustrated in FIG. 7, and buttons corresponding to only a part of the attributes may be displayed or buttons corresponding to all of the attributes may be displayed. Further, it is possible to allow the user to select for which attribute a button should be displayed.

As is described in the foregoing, in information-processing device 10 of this exemplary embodiment, the user can start inputting of data even in a state where the attribute of the data has not been determined yet. For example, in a case where the user has input "meeting with Mr. A" by using the quick input function, at the time this item of data is inputted, the attribute of the data has not been determined yet, and the data can assume any attribute (or, as a default attribute in the case where no attribute is designated, the "memo function" is associated with the data"). Thereafter, if the user inputs an item of data corresponding to the starting time or the ending time, for example, it is determined that the data group is associated with a plan, namely, the schedule function, and if the user inputs an item of data corresponding to the destination, it is determined that the data group is associated with a message, namely, the message function.

Further, information-processing device 10 of this exemplary embodiment enables data groups having different attributes to be created easily. For example, in information-processing device 10 of this exemplary embodiment, when the user inputs an item of data corresponding to the starting time or the ending time and an item of data corresponding to the status of a TODO, these items of data will be managed concurrently by each of the schedule function and the TODO list function. In such a case, the user has to input an item of data corresponding to the body only once, and therefore, the burden of data input can be reduced compared to a case where the data need be inputted for each function.

### [Modifications]

The present invention can be carried out without being limited to the aforementioned exemplary embodiment. For example, the present invention can be carried out in embodiments described in the following. Further, the present invention may be carried out in any combination of the following modified embodiments.

For example, though the present invention may be achieved by a single application integrating functions such as the memo function and the schedule function, the present invention may also be achieved by a separate application that records data groups in such a manner that the data groups can be used by individual applications corresponding to functions such as the memo function and the schedule function. For example, an application relating to the present invention may have a function of recording data groups corresponding to plans, and leave the treatment of the recorded data groups (e.g., a function of displaying multiple plans in a calendar fashion) to another application.

Further, the present invention may be applied not only to a mobile phone but also to another information-processing device. For example, the present invention may be applied to a communication terminal device such as a PDA (Personal Digital Assistant) or the like, a personal computer, a camera, a portable music player, a portable game player, and so on. These information-processing devices may have no communication means and may treat only a part of character data, sound data and taken-image data. Further, communication performed according to the present invention is not limited to wireless communication, and may be wired communication.

## Claims

1. A data-processing device comprising:
a display control means that causes a display means to display multiple input fields that receive input of data;
an acquisition means that acquires multiple items of data constituting a data group;
a recording means that records into a storage means a first item of data, which is one of the multiple items of data acquired by the acquisition means, while associating the first item of data with a first input field predetermined from among the multiple input fields, and records into the storage means a second item of data, which is one of the multiple items of data acquired by the acquisition means and inputted later than the first item of data, while associating the second item of data with a second input field(s) that is included in the multiple input fields and is different from the first input field; and
a specifying means that specifies an attribute of the data group in accordance with the second input field, the second input field being associated with the second item of data recorded into the storage means by the recording means.

2. The data-processing device according to Claim 1, wherein the acquisition means includes:
a first acquisition means that acquires the first item of data; and
a second acquisition means that, after the acquisition of the first item of data by the first acquisition means, acquires and associates with the input field(s) at least a part of a remainder of the multiple items of data.

3. The data-processing device according to Claim 1 or 2, wherein the specifying means specifies the attribute of the data group as a predetermined attribute in a case where the second item of data is not recorded by the recording means.

4. The data-processing device according to Claim 1 or 2, wherein the input fields that may be associated with the second item of data by the recording means includes an input field that is associated with an attribute and an input field that is not associated with an attribute,
and wherein the specifying means specifies the attribute of the data group as a predetermined attribute in a case where the second input field(s) associated with the second item of data by the recording means does not include the input field that is associated with an attribute.

5. The data-processing device according to any one of Claims 1 to 4, wherein the display control means causes the display means to display the data group recorded by the first and second recording means in a display mode corresponding to the attribute specified by the specifying means.

6. A program for causing a computer to function as:
a display control means that causes a display means to display multiple input fields that receive input of data;
an acquisition means that acquires multiple items of data constituting a data group;
a recording means that records into a storage means a first item of data, which is one of the multiple items of data acquired by the acquisition means, while associating the first item of data with a first input field predetermined from among the multiple input fields, and records into the storage means a second item of data, which is one of the multiple items of data acquired by the acquisition means and inputted later than the first item of data, while associating the second item of data with a second input field(s) that is included in the multiple input fields and is different from the first input field; and
a specifying means that specifies an attribute of the data group in accordance with the second input field, the second input field being associated with the second item of data recorded into the storage means by the recording means.

7. A data-processing method comprising the steps of:
causing a display means to display multiple input fields that receive input of data;
acquiring multiple items of data constituting a data group;
recording into a storage means a first item of data, which is one of the acquired multiple items of data, while associating the first item of data with a first input field predetermined from among the multiple input fields, and recording into the storage means a second item of data, which is one of the acquired multiple items of data and inputted later than the first item of data, while associating the second item of data with a second input field(s) that is included in the multiple input fields and is different from the first input field; and
specifying an attribute of the data group in accordance with the second input field, the second input field being associated with the second item of data recorded into the storage means.

8. A non-transitory computer-readable medium that stores a program for causing a computer to execute a data-processing method comprising the steps of:
causing a display means to display multiple input fields that receive input of data;
acquiring multiple items of data constituting a data group;
recording into a storage means a first item of data, which is one of the acquired multiple items of data, while associating the first item of data with a first input field predetermined from among the multiple input fields, and recording into the storage means a second item of data, which is one of the acquired multiple items of data and inputted later than the first item of data, while associating the second item of data with a second input field(s) that is included in the multiple input fields and is different from the first input field; and
specifying an attribute of the data group in accordance with the second input field, the second input field being associated with the second item of data recorded into the storage means.
